# EUROPEAN PATENT APPLICATION

(11) **EP 4 852 585 A1**
(43) Date of publication of application: **09.12.2026**
(21) Application number: 24921455.2
(22) Date of filing: 23.09.2024
(51) Int. Cl.: H04W 72/231

(54) **COMMON-SIGNAL PROCESSING METHOD, COMMUNICATION APPARATUS AND STORAGE MEDIUM**

(30) Priority: 02.02.2024 CN 202410165255
(71) Applicant: ZTE Corporation, Shenzhen, Guangdong 518057 (CN)
(72) Inventor: MA, Xuan, Shenzhen, Guangdong 518057 (CN); CHEN, Mengzhu, Shenzhen, Guangdong 518057 (CN); DAI, Bo, Shenzhen, Guangdong 518057 (CN); DAI, Jianqiang, Shenzhen, Guangdong 518057 (CN); XU, Jun, Shenzhen, Guangdong 518057 (CN); XU, Jiajun, Shenzhen, Guangdong 518057 (CN)
(74) Representative: Ziebig Hengelhaupt Intellectual Property Attorneys Patentanwaltskanzlei PartGmbB
(86) International application number: PCT/CN2024/120471
(87) International publication number: WO 2025/161431

(57) **Abstract**

The embodiments of the present disclosure provide a common-signal processing method, a communication apparatus and a storage medium. The common-signal processing method comprises: determining a common-signal configuration on the basis of a first condition; and detecting or transmitting a common signal on the basis of the common signal configuration.

## Description

The present disclosure claims priority to Chinese Patent Application No. 202410165255.7 filed on February 2, 2024, the entire contents of which are incorporated herein by reference.

### TECHNICAL FIELD

The present disclosure relates to the technical field of communications, and in particular, to a common signal processing method, a communication apparatus and a storage medium.

### BACKGROUND

With the increasing development of wireless services, the scale of networks continues to expand, and device energy consumption also rises accordingly. High energy consumption of base stations has become one of the main reasons for persistently high operating expenses (OPEX). For a base station, transmission of some common signals, for example, transmission of a Synchronization Signal/physical broadcast channel (PBCH) Block (SSB) with a short period, occupies most of the energy consumption of the base station. Therefore, reducing transmission of common signals is an important means for the base station to lower energy consumption.

### SUMMARY

In an aspect, a common signal processing method is provided. The common signal processing method includes:
determining a common signal configuration according to a first condition; and
detecting or transmitting a common signal based on the common signal configuration.

In another aspect, a common signal processing method is provided. The common signal processing method includes:
determining a common signal configuration; and
sending and/or configuring a first condition, where the first condition is used to trigger a terminal to transmit detect or transmit a common signal based on the common signal configuration.

In yet another aspect, a communication apparatus is provided. The communication apparatus includes:
a processing module, configured to determine a common signal configuration according to a first condition; and
a communication module, configured to detect or transmit a common signal based on the common signal configuration.

In yet another aspect, yet another communication apparatus is provided. The communication apparatus includes:
a processing module, configured to determine a common signal configuration; and
a communication module, configured to send and/or configure a first condition, where the first condition is used to trigger a terminal to detect or transmit a common signal based on the common signal configuration.

In yet another aspect, a communication apparatus is provided. The communication apparatus includes a processor, where the processor, upon executing a computer program, implements the common signal processing method according to any one of the above aspects.

In yet another aspect, a computer-readable storage medium is provided, where the computer-readable storage medium includes computer instructions; and where upon the computer instructions being executed, the common signal processing method according to any one of the above aspects is implemented.

In yet another aspect, a computer program product containing instructions is provided. The computer program product, upon being run on a computer, enables the computer to implement the common signal processing method according to any one of the above aspects.

### BRIEF DESCRIPTION OF THE DRAWINGS

In order to illustrate the technical solutions in the present disclosure more clearly, the drawings required to be used in some embodiments of the present disclosure will be introduced briefly below. Obviously, the drawings described below are merely drawings of some embodiments of the present disclosure, and for a person of ordinary skill in the art, other drawings may further be obtained according to these drawings.
FIG. 1 is a schematic architectural diagram of a communication system according to some embodiments of the present disclosure.
FIG. 2 is a schematic flowchart of a common signal processing method according to some embodiments of the present disclosure.
FIG. 3 is a schematic structural diagram of a second MAC CE according to some embodiments of the present disclosure.
FIG. 4 is a schematic flowchart of another common signal processing method according to some embodiments of the present disclosure.
FIG. 5 is a schematic structural diagram of a communication apparatus according to some embodiments of the present disclosure.
FIG. 6 is a schematic structural diagram of another communication apparatus according to some embodiments of the present disclosure.
FIG. 7 is a schematic structural diagram of yet another communication apparatus according to some embodiments of the present disclosure.

### DETAILED DESCRIPTION

In order to enable a person skilled in the art to better understand the technical solutions of the embodiments of the present disclosure, the technical solutions in the embodiments of the present disclosure will be described clearly and completely below in conjunction with the drawings in the embodiments of the present disclosure. Obviously, the described embodiments are merely a part of the embodiments, rather than all of the embodiments, of the present disclosure. Based on the embodiments in the present disclosure, all other embodiments obtained by a person of ordinary skill in the art without creative efforts fall within the protection scope of the present disclosure.

In the description of the present disclosure, unless otherwise specified, "/" represents the meaning of "or", and for example, A/B may represent A or B. Herein, "and/or" is merely an association relationship describing associated objects, which represents that three relationships may exist. For example, A and/or B may represent: only A, only B, and A and B. In addition, "at least one" indicates one or more, and "multiple/a plurality of" indicates two or more. The terms "first", "second", and the like do not limit the quantity and execution order, and the terms "first", "second", and the like do not necessarily limit differences.

It should be noted that, in the present disclosure, expressions such as "exemplarily" or "for example" are used to represent examples, illustrations, or explanations. Any embodiment or design solution described as "exemplarily" or "for example" in the present disclosure should not be construed as being preferred or more advantageous over other embodiments or design solutions. Specifically, the usage of expressions such as "exemplarily" or "for example" is intended to present the related concepts in a detailed manner.

Transmission of common signals occupies most of the energy consumption of a base station. Therefore, reducing the transmission of common signals is an important means for the base station to lower energy consumption. However, simply modifying the common signal configuration to an energy-saving configuration, for example, increasing the transmission period of the common signal and reducing the beam coverage range of the common signal, will greatly affect system performance and user experience. Therefore, how to transmit common signals to reduce the energy consumption of the base station while ensuring system performance and user experience is an urgent problem to be solved.

Based on this, the present disclosure provides a common signal processing method. In the above method, a common signal configuration may be determined according to a first condition, and then a common signal is detected or transmitted based on the common signal configuration, thereby achieving adaptive adjustment of the transmission or detection of common signals and reducing the energy consumption of base stations while ensuring system performance and user experience.

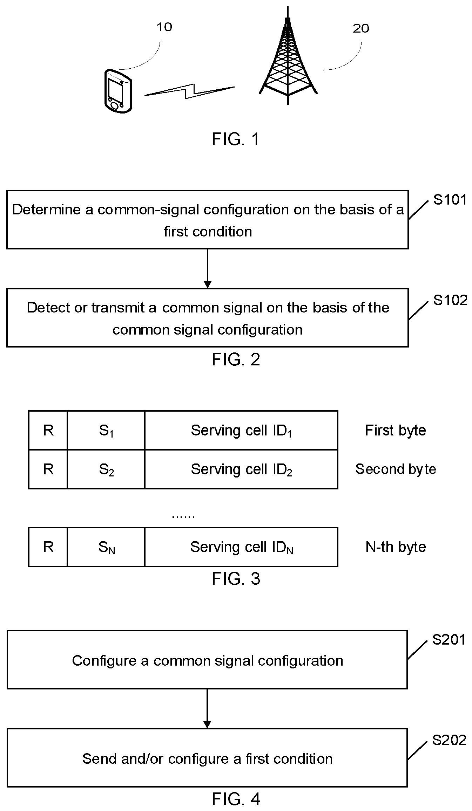

The common signal processing method provided by the present disclosure may be applied to a communication system as shown in FIG. 1. FIG. 1 shows a schematic architectural diagram of a communication system provided by the embodiments of the present disclosure. As shown in FIG. 1, the communication system includes a first node 10 and a second node 20.

In some embodiments, the first node 10 may be a device with a wireless transceiving function, which may be deployed on land, including indoors or outdoors, handheld, wearable, or vehicle-mounted; may also be deployed on water (such as a ship); and may also be deployed in the air (such as on an airplane, a balloon, and a satellite, etc.). The first node 10 may be a mobile phone, a tablet computer (Pad), a computer with a wireless transceiving function, a Virtual Reality (VR) terminal, an Augmented Reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not put limitation on the application scenarios. A terminal may sometimes also be referred to as a user, User Equipment (UE), an access terminal, a UE unit, a UE station, a mobile station, a mobile platform, a remote station, a remote terminal, a mobile device, a UE terminal, a wireless communication device, a UE agent, a UE apparatus, or the like, which is not limited in the embodiments of the present disclosure.

In some embodiments, the second node 20 may be a base station or an evolutional node B (eNB or eNodeB) in long term evolution (LTE) or long term evolution advanced (LTE-A), a base station device in a 5G network, a base station in a future communication system, or the like, where the base station may include various network-side devices such as various macro base stations, micro base stations, home base stations, remote radio units, reconfigurable intelligent surfaces (RIS), routers, wireless fidelity (WIFI) devices, etc.

It should be noted that FIG. 1 is merely an exemplary framework diagram, the number of devices included in FIG. 1 and the names of the respective devices are not limited, and in addition to the devices shown in FIG. 1, the communication system may further include other devices, such as a core network device.

The application scenarios of the embodiments of the present disclosure are not limited. The system architecture and service scenarios described in the embodiments of the present disclosure are for the purpose of more clearly illustrating the technical solutions of the embodiments of the present disclosure, and do not constitute a limitation on the technical solutions provided by the embodiments of the present disclosure. A person of ordinary skill in the art should know that with the evolution of network architectures and the emergence of new service scenarios, the technical solutions provided by the embodiments of the present disclosure are also applicable to similar technical problems.

FIG. 2 shows a schematic flowchart of a common signal processing method provided by the present disclosure, and as shown in FIG. 2, the common signal processing method is applied to the first node 10 in FIG. 1, and includes the following S101-S102.

In S101: a common signal configuration according to a first condition is determined.

The first condition includes at least one of: a first signaling, a timer, a terminal type, or a terminal capability. The first signaling includes at least one of: a radio resource control (RRC) signaling, system information, an L1 signaling, or an L2 signaling.

Exemplarily, the first signaling is transmitted or received on a primary cell (PCell) or a primary secondary cell (PSCell), and acts on at least one secondary cell (SCell).

In another example, the first signaling is transmitted/received on an indicated cell. For example, the terminal receives the first signaling on a first cell, and indication content of the first signaling acts on the first cell. The first cell is a primary cell or a secondary cell.

In some embodiments, the radio resource control (RRC) signaling is used to configure or update the common signal configuration; or the radio resource control (RRC) signaling is used to configure at least one set of common signal configurations, where the common signal configuration is a set of common signal configurations in the at least one set of common signal configurations.

Exemplarily, the common signal configuration is updated by RRC signaling reconfiguration. In response to receiving the RRC signaling, a target secondary cell adds the updated common signal configuration, and applies the updated common signal configuration, so as to update the common signal configuration.

In another example, the RRC signaling configures at least one set of common signal configurations, and one set of common signal configurations is selected from the at least one set of common signal configurations as the updated common signal configuration. Each set of common signal configurations in the at least one set of common signal configurations is associated with an index of a common signal configuration.

In some embodiments, a set of common signal configurations in the at least one set of common signal configurations configured by the RRC signaling is a default common signal configuration.

Exemplarily, the default common signal configuration may be a common signal configuration associated with an index of a common signal configuration of 0. In a case where no common signal configuration indication signaling is detected or a timer for the default common signal configuration does not expire, the first node detects a common signal according to the default common signal configuration. The common signal configuration indication signaling includes at least one of: a system information block (SIB1), an L1 signaling, or an L2 signaling.

In some embodiments, the system information (SI) is used to configure or update the common signal configuration; or the system information is used to configure at least one set of common signal configurations, where the common signal configuration is a set of common signal configurations in the at least one set of common signal configurations.

Exemplarily, the common signal configuration may be determined via the SI. Alternatively, the SI may be carried on the SIB1, and the common signal configuration may also be determined by the SIB1.

In another example, the SI may carry a common signal configuration update indication. Alternatively, the SI may also directly carry the common signal configuration required for updating.

The common signal configuration update indication may indicate an index associated with a common signal configuration, or may directly indicate a common signal configuration.

In a case where the SI configures at least one set of common signal configurations, each set of common signal configurations is associated with an index of a common signal configuration. In this case, the common signal configuration update indication carried by the SI may be used to indicate an index associated with a common signal configuration.

Exemplarily, in a case where the common signal configuration update indication carried by the SI is used to indicate an index associated with a common signal configuration and the SI is carried on the SIB1, the first node finds, through detection, that the index of the common signal configuration currently used is inconsistent with the index of the common signal configuration carried by the SIB1. The first node determines that the common signal configuration needs to be updated, and starts to perform common signal detection according to the common signal configuration associated with the index of the common signal configuration carried by the SIB1 from a first occasion.

In a case where the common signal configuration update indication carried by the SI is used to indicate a common signal configuration, the first node may directly detect the SI and determine the common signal configuration indicated by the SI. When the common signal configuration detected by the first node is inconsistent with the current common signal configuration, the first node determines that the common signal configuration needs to be updated, and starts to perform common signal detection according to the common signal configuration carried by the SI from a first occasion.

In some embodiments, in a case where the common signal configuration is updated, an SI change occurs. The first node detects the SI change, and in a case where the SI change is detected, the first node receives the SI, determines the updated common signal configuration according to the common signal configuration update indication carried by the SI, and starts to perform common signal detection according to the updated common signal configuration from a first time.

Exemplarily, the first time may be a start time of a common signal modification period. Alternatively, the first time may be a start time of a validity duration of a next common signal configuration.

In another example, the SI is SI transmitted on a primary cell (PCell). The SI indicates that the updated common signal configuration is applied to the above-mentioned PCell.

As such, by configuring or updating the common signal configuration by the SI, the communication system may more flexibly adapt to different network conditions. Moreover, the SI may also directly carry the common signal configuration, and the first node may directly detect the SI to determine whether the common signal configuration needs to be updated, thereby improving the efficiency of determining the common signal configuration.

In some embodiments, the L1 signaling includes at least one of: a first bit field, a second bit field, a third bit field, a fourth bit field, or a fifth bit field.

The first bit field is used to indicate a current common signal configuration or an index of a common signal configuration associated with the current common signal configuration; the second bit field is used to indicate an updated common signal configuration or an index of a common signal configuration associated with the updated common signal configuration; the third bit field is used to indicate whether the common signal configuration is updated; the fourth bit field is used to indicate a physical random access channel (PRACH) configuration adaptive operation; and the fifth bit field is used to indicate a paging occasion (PO) adaptive operation.

Exemplarily, in a case where the first bit field is used to indicate the current common signal configuration, the first bit field may indicate all or part of the configuration of the current common signal configuration. For example, the first bit field may indicate a common signal transmission period in the current common signal configuration. For another example, the first bit field may indicate common signals actually transmitted in the current common signal configuration. The first bit field may be presented in the form of a bitmap, the first bit field occupies a plurality of bits, and each bit in the plurality of bits corresponds to an index of a common signal. In a case where a bit is 0, it indicates that the common signal associated with the bit is not transmitted. Correspondingly, in a case where a bit is 1, it indicates that the common signal associated with the bit is transmitted.

In another example, in a case where the first bit field may indicate all or part of the configuration of the current common signal configuration, the first bit field may simultaneously indicate a common signal transmission period and common signals actually transmitted in the current common signal configuration. For example, the first bit field may be divided into two parts (i.e., the first part and the second part). The first part is used to indicate the common signal transmission period in the current common signal configuration, and the second part is used to indicate the common signals actually transmitted in the current common signal configuration.

It should be understood that in a case where the high-layer signaling (such as RRC signaling) or SI configures at least one set of common signal configurations, each set of common signal configurations in the at least one set of common signal configurations is associated with an index of a common signal configuration. In this case, the first bit field may be used to indicate the index of the common signal configuration associated with the current common signal configuration.

Exemplarily, in a case where the second bit field is used to indicate the updated common signal configuration, the second bit field may be used to indicate all or part of the configuration of the updated common signal configuration. For example, the second bit field may be used to indicate a common signal transmission period in the updated common signal configuration, which may also be referred to as an effective time of the updated common signal configuration. In a case where the second bit field only indicates the common signal transmission period in the updated common signal configuration, the second bit field indicates that, except for the common signal transmission period, other common signal configurations of the updated common signal configuration and the current common signal configuration are the same, or adopt the default common signal configuration. For another example, the second bit field may be used to indicate indexes of common signals actually transmitted in the updated common signal configuration. The second bit field may be presented in the form of a bitmap, which occupies a plurality of bits. Each bit in the plurality of bits corresponds to an index of a common signal. In a case where a bit is 0, it indicates that the common signal associated with the bit is not transmitted. Correspondingly, in a case where a bit is 1, it indicates that the common signal associated with the bit is transmitted. For another example, the second bit field may simultaneously indicate the common signal transmission period in the updated common signal configuration and the indexes of the common signals actually transmitted in the updated common signal configuration. The second bit field may be divided into two parts (i.e., the first part and the second part), where the first part is used to indicate the common signal transmission period in the updated common signal configuration, and the second part is used to indicate the indexes of the common signals actually transmitted in the updated common signal configuration.

It should be understood that in a case where the high-layer signaling (such as the RRC signaling) or SI configures at least one set of common signal configurations, each set of common signal configurations in the at least one set of common signal configurations is associated with an index of a common signal configuration. In this case, the second bit field may be used to indicate the index of the common signal configuration associated with the updated common signal configuration.

Exemplarily, in a case where the second bit field is used to indicate the index of the common signal configuration associated with the updated common signal configuration, starting from an effective time of a next common signal configuration, the current common signal configuration is updated to the common signal configuration associated with the index of the common signal configuration indicated by the second bit field.

It should be noted that the second bit field is used to indicate the updated common signal configuration or the index of the common signal configuration associated with the updated common signal configuration. The updated common signal configuration or the index of the common signal configuration associated with the updated common signal configuration may also be described as a common signal configuration to be adopted or an index of a common signal configuration associated with the common signal configuration to be adopted, which is not limited in the present disclosure.

Exemplarily, the third bit field may occupy 1 bit. In a case where the bit has a value of 1, it indicates that the common signal configuration is updated. In a case where the bit has a value of 0, it indicates that the common signal configuration is not updated. For example, in a case where the third bit field indicates that the common signal configuration is updated, after receiving the updated common signal configuration, the first node starts to detect common signals according to the updated common signal configuration from a first time. The first time may be a start time of a next common signal period. Alternatively, the first time may also be an effective time or a start time of a validity duration of a next common signal configuration.

In another example, in a case where the third bit field indicates that the common signal configuration is updated, and the common signal configuration information is carried on a physical downlink shared channel (PDSCH) (such as SIB1), the first node acquire the updated common signal configuration by receiving the PDSCH, and starts to detect common signals according to the updated common signal configuration from an effective time of a validity duration of a next common signal configuration.

Exemplarily, the fourth bit field is used to indicate that the PRACH configuration is adaptively adjusted according to a state of a network or a channel. As such, the communication system may better adapt to different network conditions and requirements, thereby improving the flexibility and performance of the system.

Exemplarily, the fifth bit field is used to indicate that the PO is adaptively adjusted according to a state of a network or a channel, so that the communication system may better adapt to different network conditions and requirements, thereby improving the flexibility and performance of the system.

In this way, indicating related functions of different common signal configurations by a plurality of bit fields carried by the L1 signaling, can improve the flexibility and accuracy of configuration. Moreover, it is also enabled to indicate adaptive adjustments of the PRACH and the PO by the bit fields, so that the communication system adapts to different network conditions, thereby improving flexibility and performance.

In some embodiments, the L1 signaling includes group common downlink control information (DCI) or cell specific downlink control information.

A search space set of the L1 signaling includes at least one of: a Type2-physical downlink control channel common search space set (Type2-PDCCH CSS set), a Type2A-PDCCH common search space set (Type2A-PDCCH CSS set), or a Type3-PDCCH common search space set (Type3-PDCCH CSS set).

In an implementation, the L1 signaling is one of DCI format 2_X.

Exemplarily, for a terminal in a connected state, the L1 signaling may be DCI format 2_6. A bit field related to the common signal configuration is located after a dormancy indication bit field of a secondary cell (SCell) in DCI format 2_6. Alternatively, the bit field related to the common signal configuration is a redefined bit field in DCI format 2_6, for example, a wake-up signal (WUS) and/or SCell dormancy indication bit field.

In another example, for a terminal in an idle or inactive mode, the L1 signaling may be DCI format 2_7. A bit field related to the common signal configuration is located after a tracking reference signal (TRS) availability indication bit field in DCI format 2_7. Alternatively, the bit field related to the common signal configuration is a redefined bit field in DCI format 2_7, for example, a paging indication bit field and/or a TRS availability indication bit field. A validity duration of the common signal configuration indicated by the bit field related to the common signal configuration is consistent with a validity duration of the TRS indicated in the TRS-related bit field in DCI format 2_7.

In another example, for a terminal in a connected state, the L1 signaling may be DCI format 2_9. A bit field related to the common signal configuration is a bit field in DCI format 2_9 or a newly added bit field.

In another example, the L1 signaling may be paging DCI scrambled by a paging-radio network temporary identifier (P-RNTI). Alternatively, the L1 signaling may be DCI format 1_0 scrambled by an SI-RNTI.

As such, the L1 signaling includes a plurality of search space sets, which may provide more flexible resource configuration and help meet different service requirements. Moreover, the L1 signaling may also use different DCI formats according to different terminal states, which may utilize resources more effectively and improve the accuracy of configuration.

In some embodiments, the L2 signaling includes a first media access control control element (MAC CE).

The first MAC CE is an MAC CE used for activating/deactivating at least one secondary cell. For example, the first MAC CE may be one of an SCell Activation/Deactivation MAC CE or an enhanced SCell Activation/Deactivation MAC CE. The first MAC CE may also be referred to as a secondary carrier activation/deactivation MAC CE.

Exemplarily, the first MAC CE includes a reserved bit, and the reserved bit in the first MAC CE is used to indicate the common signal configuration. In a case where the reserved bit R in the first MAC CE is 0, it indicates that the common signal configuration is a first common signal configuration. In a case where the reserved bit R in the first MAC CE is 1, it indicates that the common signal configuration is a second common signal configuration.

In another example, the common signal configuration indicated in the first MAC CE is only effective for an activated or to-be-activated secondary cell. Alternatively, the common signal configuration indicated in the first MAC CE is only effective during an activation process of the secondary cell. Alternatively, the common signal configuration indicated in the first MAC CE is always effective after the first MAC CE.

As such, the first MAC CE limits the effectiveness of the common signal configuration, which may improve the accuracy of the common signal configuration and ensure that the common signal configuration adapts to the state or event of the specified secondary cell.

In some embodiments, the L2 signaling includes a beam failure recovery MAC CE.

In some embodiments, the L2 signaling includes a second MAC CE.

The second MAC CE includes at least one of: a sixth bit field, a seventh bit field, an eighth bit field, a ninth bit field, or a reserved bit field. The sixth bit field is used to indicate activation or deactivation of at least one secondary cell; the seventh bit field is used to indicate activation or deactivation of a common signal configuration on the at least one secondary cell; the eighth bit field includes an identifier of the secondary cell; and the ninth bit field includes an index of a common signal configuration of the secondary cell.

Exemplarily, the second MAC CE may simultaneously carry the eighth bit field, the ninth bit field, and the reserved bit field. For example, as shown in FIG. 3, FIG. 3 shows a schematic structural diagram of the second MAC CE. The second MAC CE includes a plurality of bytes, where the eighth bit field occupies 5 bits of each byte in the plurality of bytes, the ninth bit field occupies 2 bits of each byte in the plurality of bytes, and the reserved bit field occupies 1 bit of each byte in the plurality of bytes. The eighth bit field is used to indicate a serving cell identifier (Serving cell IDᵢ) of a target cell, and the ninth bit field is used to indicate an index Sᵢ of a common signal configuration on the target cell.

As such, the second MAC CE includes a plurality of bit fields, which may configure related parameters of the common signal configuration more flexibly. Moreover, the plurality of bit fields may respectively implement different functions, further improving the flexibility of configuration. By carrying a plurality of bit fields, the utilization of communication resources can also be improved.

In some embodiments, the first node detects the first signaling at least once within an application period associated with the common signal configuration.

Each common signal configuration is associated with an application period.

Exemplarily, within the application period, the common signal configuration remains unchanged. The application period may be equal to a validity duration of the common signal configuration. The first node detects the first signaling at least once within the application period. The application period includes one or more first signaling monitoring occasions.

It should be noted that within the application period, the second node does not configure or transmit different common signal configurations or common signal configuration update indications. Correspondingly, within the application period, the first node does not expect to receive different common signal configurations or common signal configuration update indications.

In an implementation, the application period is associated with at least one of: a system information modification period, a default paging cycle, a discontinuous reception (DRX) cycle, an extended discontinuous reception (e-DRX) cycle, a TRS validity duration, a common signal modification period, or a PRACH association period.

In other embodiments, the first node detects the first signaling within a detection time.

The detection time includes at least one of: a first radio frame, a first detection window.

Exemplarily, the first radio frame satisfies at least one of:
an odd-numbered frame;
an even-numbered frame;
   $\left(A+B\right) mod T = 0 ;$ or
   $A mod T = 0 .$

*A* is a system frame number (SFN) of a second radio frame, *B* is a time offset, such as an radio frame (RF) offset, and *T* is a parameter configured by RRC or a predefined parameter.

In another example, the first detection window includes at least one of: a start point, an end point, or a duration. The start point and the end point are associated with at least one of: a common signal, a PO, or a random access channel occasion (RO). For example, the end point of the first detection window is separated from an SSB by a first offset.

As such, detecting the first signaling within a specific time by the first node helps to control the reception and processing of the first signaling more flexibly. Moreover, detecting the first signaling only within a specific time can also reduce energy consumption and improve detection accuracy.

In some embodiments, the timer is associated with the common signal configuration.

The timer is used to indicate an update of a common signal configuration.

In an implementation, in response to expiration of the timer, the common signal configuration is updated.

Exemplarily, the timer is started when a first common signal configuration takes effect. In a case where the timer expires, the common signal configuration is switched from the first common signal configuration to a second common signal configuration. In a case where the timer expires, the first node detects common signals based on the second common signal configuration. Alternatively, the first common signal configuration is not associated with a timer, and the second common signal configuration is associated with a timer. The timer is not started when the first common signal configuration takes effect. The timer is started when the second common signal configuration takes effect, and in a case where the timer expires, the common signal configuration is switched from the second common signal configuration to the first common signal configuration. The first common signal configuration is a default common signal configuration, and the second common signal configuration is a non-default common signal configuration.

In another example, the first common signal configuration is associated with a timer. The timer is started when the first common signal configuration takes effect, and in a case where the timer expires, the common signal configuration is switched from the first common signal configuration to the second common signal configuration. The first common signal configuration is a default common signal configuration, and the second common signal configuration is a non-default common signal configuration.

In another example, the timer may include a plurality of timers, such as a first timer, a second timer, ..., an N-th timer, where N is a positive integer. The first common signal configuration may be associated with the first timer, and the second common signal configuration may be associated with the second timer. The first timer is started when the first common signal configuration takes effect, and in a case where the first timer expires, the common signal configuration is switched from the first common signal configuration to the second common signal configuration. The second timer is started when the second common signal configuration takes effect. In a case where the second timer expires, the common signal configuration is switched from the second common signal configuration to the first common signal configuration.

In an implementation, the timer is associated with a common signal modification period in the common signal configuration.

Exemplarily, the timer is started when the common signal configuration takes effect. In a case where the timer expires, the first node detects a common signal configuration modification indication, and the first node may confirm whether to update the common signal configuration according to the common signal modification period indicated by the common signal configuration modification indication.

In another example, the timer may be associated with at least one of: a cell Discontinuous Transmission (DTX)/DRX on duration timer, or a connected DRX (C-DRX) on duration timer. For example, during running of the cell DTX/DRX on duration timer or the C-DRX on duration timer, the first common signal configuration is adopted, and in a case where the cell DTX/DRX on duration timer or the C-DRX on duration timer expires, the second common signal configuration is adopted.

As such, by associating the timer with the common signal configuration, the update of the common signal configuration is indicated by the timer, thereby enabling improvement the flexibility and efficiency of the update, without an external trigger for the update.

In some embodiments, the common signal configuration is determined by a terminal type.

Exemplarily, for a terminal before the 19th release (R19) of wireless communication technology, the common signal configuration is a default common signal configuration or is configured by an RRC signaling. Exemplarily, for a terminal of R19 and thereafter, the common signal configuration may be configured by at least one of: an RRC signaling, an SIB1, an L1 signaling, or an L2 signaling, a timer.

In some embodiments, the common signal configuration is determined by a terminal capability.

Exemplarily, for a terminal that does not support a base station energy-saving terminal capability, the common signal configuration is a default common signal configuration or is configured by an RRC signaling. For a terminal that supports the base station energy-saving terminal capability, the common signal configuration may be configured by at least one of: an RRC signaling, an SIB1, an L1 signaling, or an L2 signaling, a timer.

As such, determining the common signal configuration according to the terminal type or the terminal capability may provide more flexible configuration options. Moreover, determining the common signal configuration according to the terminal type or the terminal capability may improve the matching degree between the common signal configuration and the terminal, thereby improving the compatibility and applicability of the common signal configuration.

In S102: a common signal is detected or a common signal is transmitted based on the common signal configuration.

The common signal configuration includes at least one of: a common signal transmission period, a common signal transmission period scaling factor, a common signal repetition period, a common signal modification period, a subcarrier spacing of the common signal, a common signal pattern, a common signal index indication, a common signal transmission power, a common signal power offset, a common signal time domain offset, or a common signal configuration timer.

Exemplarily, the common signal modification period may be predefined. For example, the common signal modification period may be configured by an RRC signaling or an SIB (such as an SIB1).

In another example, the common signal modification period is a validity duration of the common signal configuration. Alternatively, the common signal modification period is a basic unit of the validity duration of the common signal configuration. For example, the validity duration of the common signal configuration is equal to N times the common signal modification period. The common signal modification period is equal to N times a system information modification period (SI modification period). The common signal modification period is equal to N times a discontinuous reception (DRX) cycle. The common signal modification period is equal to N times an extended DRX (e-DRX) cycle. The common signal modification period is equal to N times a TRS validity duration. N is a positive integer.

As such, the diversity of the common signal configuration enables the common signal configuration to adapt to more network conditions, thereby improving the flexibility of the common signal configuration. Moreover, the fine design of the common signal configuration may improve the accuracy of the common signal configuration.

In some embodiments, a validity duration of the common signal configuration is associated with at least one of: an application period associated with the common signal configuration, a timer associated with the common signal configuration, a common signal modification period, a predefined time.

Exemplarily, in a case where the validity duration of the common signal configuration is associated with the application period associated with the common signal configuration, the validity duration of the common signal configuration may be equal to M times the application period associated with the common signal configuration. Alternatively, in a case where the validity duration of the common signal configuration is associated with the timer associated with the common signal configuration, in response to the timer associated with the common signal configuration expires, the common signal configuration becomes invalid. Alternatively, in a case where the validity duration of the common signal configuration is associated with the common signal modification period, the validity duration of the common signal configuration may be equal to N times the common signal modification period. N and M are both positive integers.

In another example, in a case where the validity duration of the common signal configuration is associated with the predefined time, the validity duration of the common signal configuration may be configured by an RRC signaling or configured by an SIB1. Alternatively, the validity duration of the common signal configuration may be equal to N times the system information modification period. Alternatively, the validity duration of the common signal configuration is equal to N times a default paging cycle. Alternatively, the validity duration of the common signal configuration is equal to N times the TRS validity duration. N is a positive integer.

In some embodiments, an effective time of the common signal configuration includes any one of: a current moment, a start moment of a next application period of a current application period, a start moment of a next common signal modification period of a current common signal modification period, or a start moment of a second radio frame.

A system frame number *A* of the second radio frame satisfies: $\left(A+B\right) mod T = 0 ;$
where *B* is any one of: an effective time offset RF offset of the common signal configuration, a predefined parameter, or a high-layer configuration parameter; and *T* is any one of: a validity duration of the common signal configuration, an application period associated with the common signal configuration, a common signal modification period, or a predefined parameter.

Exemplarily, *B* may also be configured by an RRC signaling or configured by an SIB. Alternatively, *B* may also be 0. Alternatively, *B* may also be a cell specific parameter. *T* may also be configured by a high layer or configured by an SIB.

In other embodiments, the effective time of the common signal configuration may be determined according to a time when the first node receives the first signaling.

Exemplarily, after the first node receives the first signaling, the common signal configuration takes effect immediately. Alternatively, in some embodiments, after a predefined time after the first signaling is received, the common signal configuration takes effect.

It should be noted that a common signal configuration timer is started when the common signal configuration is adopted. In a case where the common signal configuration timer expires, the common signal configuration is switched to a default common signal configuration or a specified common signal configuration.

In some embodiments, the common signal configuration is used for at least one of: a common signal configuration adopted by a base station for transmitting a common signal, a common signal configuration adopted by a terminal for detecting a common signal, a common signal configuration currently adopted, or an updated common signal configuration.

In some embodiments, the common signal includes at least one of: a synchronization signal/physical broadcast channel block (SSB), a system information block (SIB1), a physical random access channel (PRACH), a paging, a Discovery Reference Signal (DRS), a primary synchronization signal (PSS), a secondary synchronization signal (SSS), or a channel state information-reference signal (CSI-RS).

FIG. 4 shows a schematic flowchart of a common signal processing method provided by the present disclosure. As shown in FIG. 4, the common signal processing method is applied to the second node 20 in FIG. 1, and includes the following S201-S202.

In S201: a common signal configuration is configured.

In some embodiments, the common signal configuration includes at least one of: a common signal transmission period, a common signal transmission period scaling factor, a common signal repetition period, a common signal modification period, a subcarrier spacing of a common signal, a common signal pattern, a common signal index indication, a common signal transmission power, a common signal power offset, a common signal time domain offset, or a common signal configuration timer.

In S202: a first condition is sent and/or configured.

The first condition is used to trigger a first node to detect a common signal or transmit a common signal based on the common signal configuration.

In some embodiments, the first condition includes at least one of: a first signaling, a timer, a terminal type, or a terminal capability.

The first signaling includes at least one of: a radio resource control (RRC) signaling, system information, an L1 signaling, or an L2 signaling.

In some embodiments, the radio resource control (RRC) signaling is used to configure or update the common signal configuration; or the radio resource control (RRC) signaling is used to configure at least one set of common signal configurations, where the common signal configuration is a set of common signal configurations in the at least one set of common signal configurations.

In some embodiments, the system information is used to configure or update the common signal configuration; or the system information is used to configure at least one set of common signal configurations, where the common signal configuration is a set of common signal configurations in the at least one set of common signal configurations.

In some embodiments, the L1 signaling includes at least one of: a first bit field, a second bit field, a third bit field, a fourth bit field, or a fifth bit field; where the first bit field is used to indicate a current common signal configuration or an index of a common signal configuration associated with the current common signal configuration; the second bit field is used to indicate an updated common signal configuration or an index of a common signal configuration associated with the updated common signal configuration; the third bit field is used to indicate whether the common signal configuration is updated; the fourth bit field is used to indicate a PRACH configuration adaptive operation; and the fifth bit field is used to indicate a paging occasion adaptive operation.

In some embodiments, the L1 signaling includes group common downlink control information or cell specific downlink control information.

In some embodiments, the L2 signaling includes a first MAC CE, and the first MAC CE is an MAC CE used for activating or deactivating at least one secondary cell.

A reserved bit in the first MAC CE is used to indicate the common signal configuration.

In some embodiments, the L2 signaling includes a second MAC CE, and the second MAC CE includes at least one of: a sixth bit field, a seventh bit field, an eighth bit field, a ninth bit field, or a reserved bit field; where the sixth bit field is used to indicate activation or deactivation of at least one secondary cell; the seventh bit field is used to indicate activation or deactivation of a common signal configuration on the at least one secondary cell; the eighth bit field includes an identifier of the secondary cell; and the ninth bit field includes an index of a common signal configuration of the secondary cell.

In some embodiments, the timer is associated with the common signal configuration.

In some embodiments, a validity duration of the common signal configuration is associated with at least one of: an application period associated with the common signal configuration, a timer associated with the common signal configuration, a common signal modification period, a predefined time.

In some embodiments, an effective time of the common signal configuration includes any one of: a current moment, a start moment of a next application period of a current application period, a start moment of a next common signal modification period of a current common signal modification period, or a start moment of a second radio frame.

In some embodiments, a system frame number *A* of the second radio frame satisfies: $\left(A+B\right) mod T = 0 ;$
where *B* is any one of: an effective time offset RF offset of the common signal configuration, a predefined parameter, or a high-layer configuration parameter; and *T* is any one of: a validity duration of the common signal configuration, an application period associated with the common signal configuration, a common signal modification period, or a predefined parameter.

It should be noted that in a case where the first condition only includes one or more of the first signaling, the terminal type, or the terminal capability, the second node may directly send the first condition to the first node. In a case where the first condition includes a timer, the second node may configure related parameters of the timer, so that the terminal determines and updates the corresponding common signal configuration based on the timer.

It can be understood that in order to implement the above functions, a communication apparatus contains corresponding hardware structures and/or software modules for performing the respective functions. A person skilled in the art should easily realize that, in combination with the algorithm steps of the examples described in the embodiments of the present disclosure, the present disclosure may be implemented in the form of hardware or a combination of hardware and computer software. Whether a function is executed by hardware or computer software driving hardware depends on the specific application and design constraints of the technical solution. A professional technician may use different methods for each specific application to implement the described functions, but such implementation should not be considered beyond the scope of the present disclosure.

The embodiments of the present disclosure may divide the communication apparatus into functional modules according to the above method embodiments. For example, each functional module may be divided corresponding to one function, or two or more functions may be integrated into one functional module. The above integrated modules may be implemented in the form of hardware or in the form of software. It should be noted that the division of modules in the embodiments of the present disclosure is schematic and merely a logical function division, and there may be other division manners in actual implementation. The following description is given by taking an example where each functional module is divided corresponding to one function.

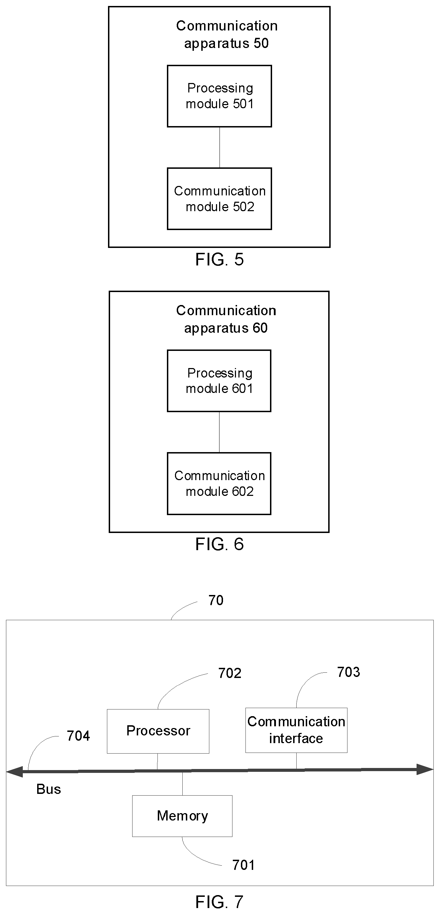

FIG. 5 is a schematic structural diagram of a communication apparatus applied to a first node provided by the embodiments of the present disclosure. The communication apparatus 50 may execute the common signal processing method provided by the above method embodiments. As shown in FIG. 5, the communication apparatus 50 includes a processing module 501 and a communication module 502.

The processing module 501 is configured to determine a common signal configuration according to a first condition.

The communication module 502 is configured to detect a common signal or transmit a common signal based on the common signal configuration.

In some embodiments, the common signal includes at least one of: a synchronization signal/physical broadcast channel block (SSB), a system information block (SIB1), a physical random access channel (PRACH), a paging, a discovery reference signal (DRS), a primary synchronization signal (PSS), a secondary synchronization signal (SSS), or a channel state information-reference signal (CSI-RS).

In some embodiments, the common signal configuration includes at least one of: a common signal transmission period, a common signal transmission period scaling factor, a common signal repetition period, a common signal modification period, a subcarrier spacing of a common signal, a common signal pattern, a common signal index indication, a common signal transmission power, a common signal power offset, a common signal time domain offset, or a common signal configuration timer.

In some embodiments, the first condition includes at least one of: a first signaling, a timer, a terminal type, or a terminal capability.

In some embodiments, the first signaling includes at least one of: a radio resource control (RRC) signaling, system information, an L1 signaling, or an L2 signaling.

In some embodiments, the radio resource control (RRC) signaling is used to configure or update the common signal configuration; or the radio resource control (RRC) signaling is used to configure at least one set of common signal configurations, where the common signal configuration is a set of common signal configurations in the at least one set of common signal configurations.

In some embodiments, the system information is used to configure or update the common signal configuration; or the system information is used to configure at least one set of common signal configurations, where the common signal configuration is a set of common signal configurations in the at least one set of common signal configurations.

In some embodiments, the L1 signaling includes at least one of: a first bit field, a second bit field, a third bit field, a fourth bit field, or a fifth bit field; where the first bit field is used to indicate a current common signal configuration or an index of a common signal configuration associated with the current common signal configuration; the second bit field is used to indicate an updated common signal configuration or an index of a common signal configuration associated with the updated common signal configuration; the third bit field is used to indicate whether the common signal configuration is updated; the fourth bit field is used to indicate a PRACH configuration adaptive operation; and the fifth bit field is used to indicate a paging occasion adaptive operation.

In some embodiments, the L1 signaling includes group common downlink control information or cell specific downlink control information.

In some embodiments, the L2 signaling includes a first MAC CE, and the first MAC CE is an MAC CE used for activating or deactivating at least one secondary cell.

In some embodiments, a reserved bit in the first MAC CE is used to indicate the common signal configuration.

In some embodiments, the L2 signaling includes a second MAC CE, and the second MAC CE includes at least one of: a sixth bit field, a seventh bit field, an eighth bit field, a ninth bit field, or a reserved bit field; where the sixth bit field is used to indicate activation or deactivation of at least one secondary cell; the seventh bit field is used to indicate activation or deactivation of a common signal configuration on the at least one secondary cell; the eighth bit field includes an identifier of the secondary cell; and the ninth bit field includes an index of a common signal configuration of the secondary cell.

In some embodiments, the above-mentioned communication module 502 is further configured to detect the first signaling at least once within an application period associated with the common signal configuration.

In some embodiments, the common signal configuration is adopted within the application period associated with the common signal configuration.

In some embodiments, the application period is associated with at least one of: a system information modification period, a default paging cycle, a discontinuous reception (DRX) cycle, an extended discontinuous reception (e-DRX) cycle, a TRS validity duration, a common signal modification period, a PRACH association period.

In some embodiments, the above-mentioned communication module 502 is further configured to detect the first signaling within a detection time, where the detection time includes at least one of: a first radio frame, a first detection window.

In some embodiments, the timer is associated with the common signal configuration.

In some embodiments, the above-mentioned processing module 501 is further configured to, in response to expiration of the timer, updating the common signal configuration.

In some embodiments, a validity duration of the common signal configuration is associated with at least one of: an application period associated with the common signal configuration, a timer associated with the common signal configuration, a common signal modification period, or a predefined time.

In some embodiments, an effective time of the common signal configuration includes any one of: a current moment, a start moment of a next application period of a current application period, a start moment of a next common signal modification period of a current common signal modification period, or a start moment of a second radio frame.

In some embodiments, a system frame number *A* of the second radio frame satisfies: $\left(A+B\right) mod T = 0 ;$

Where *B* is any one of: an effective time offset RF offset of the common signal configuration, a predefined parameter, or a high-layer configuration parameter; and *T* is any one of: a validity duration of the common signal configuration, an application period associated with the common signal configuration, a common signal modification period, or a predefined parameter.

FIG. 6 is a schematic structural diagram of a communication apparatus applied to a base station provided by the embodiments of the present disclosure. The communication apparatus 60 may execute the common signal processing method provided by the above method embodiments. As shown in FIG. 6, the communication apparatus 60 includes a processing module 601 and a communication module 602.

The processing module 601 is configured to configure a common signal configuration.

The communication module 602 is configured to send and/or configure a first condition, where the first condition is used to trigger a first node to detect a common signal or transmit a common signal based on the common signal configuration.

In some embodiments, the common signal includes at least one of: a synchronization signal/physical broadcast channel block (SSB), a system information block (SIB1), a physical random access channel (PRACH), a paging, a discovery reference signal (DRS), a primary synchronization signal (PSS), a secondary synchronization signal (SSS), or a channel state information-reference signal (CSI-RS).

In some embodiments, the common signal configuration includes at least one of: a common signal transmission period, a common signal transmission period scaling factor, a common signal repetition period, a common signal modification period, a subcarrier spacing of a common signal, a common signal pattern, a common signal index indication, a common signal transmission power, a common signal power offset, a common signal time domain offset, or a common signal configuration timer.

In a case where the functions of the above integrated modules are implemented in the form of hardware, the embodiments of the present disclosure provide another structure of the communication apparatus involved in the above embodiments. As shown in FIG. 7, the communication apparatus 70 includes: a memory 701, a processor 702, a communication interface 703, and a bus 704.

The memory 701 may be a read-only memory (ROM) or other types of static storage devices that may store static information and instructions, may be a random access memory (RAM) or other types of dynamic storage devices that may store dynamic information and instructions, may also be an electrically erasable programmable read-only memory (EEPROM), a disk storage medium or other magnetic storage devices, or any other medium that may be used to carry or store desired program codes in the form of instructions or data structures and that may be accessed by a computer, but is not limited thereto.

The processor 702 may implement or execute various exemplary logical blocks, modules, and circuits described in conjunction with the embodiments of the present disclosure. The processor 702 may be a central processor, a general-purpose processor, a digital signal processor, a specific application integrated circuit, a field programmable gate array or other programmable logic devices, a transistor logic device, a hardware component, or any combination thereof. The processor 702 may implement or execute various exemplary logical blocks, modules, and circuits described in conjunction with the embodiments of the present disclosure. The processor 702 may also be a combination implementing computing functions, for example, a combination including one or more microprocessors, a combination of a digital signal processor (DSP) and a microprocessor, etc.

The communication interface 703 is configured to connect to other devices through a communication network. The communication network may be an Ethernet, a wireless access network, a wireless local area network (WLAN), etc.

In an implementation, the memory 701 may exist independently of the processor 702, and the memory 701 may be connected to the processor 702 through the bus 704, for storing instructions or program codes. The processor 702, when calling and executing the instructions or program codes stored in the memory 701, may implement the common signal processing method provided by the embodiments of the present disclosure.

In another implementation, the memory 701 may also be integrated with the processor 702.

The bus 704 may be an extended industry standard architecture (EISA) bus, etc. The bus 704 may be divided into an address bus, a data bus, a control bus, etc. For ease of representation, only one thick line is used to represent the bus 704 in FIG. 7, but it does not mean that there is only one bus or one type of bus.

Some embodiments of the present disclosure provide a computer-readable storage medium (such as a non-transitory computer-readable storage medium), and the computer-readable storage medium has computer program instructions stored therein. The computer program instructions, upon being run on a computer, enable the computer to perform the common signal processing method as described in any one of the above embodiments.

Exemplarily, the above-mentioned computer-readable storage medium may include, but is not limited to: a magnetic storage device (such as a hard disk, a floppy disk, a magnetic tape, or the like), an optical disk (such as a Compact Disk (CD), a Digital Versatile Disk (DVD), etc.), a smart card, and a flash memory device (such as an Erasable Programmable Read-Only Memory (EPROM), a card, a stick, a key drive, or the like). Various computer-readable storage media described in the present disclosure may represent one or more devices and/or other machine-readable storage media for storing information. The term "machine-readable storage medium" may include, but is not limited to, a wireless channel and various other media capable of storing, containing, and/or carrying instructions and/or data.

The embodiments of the present disclosure provide a computer program product containing instructions. The computer program product, upon being run on a computer, enables the computer to perform the common signal processing method as described in any one of the above embodiments.

The foregoing is only the specific embodiments of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be determined based on the protection scope of claims.

## Claims

1. A common signal processing method, applied to a first node, wherein the method comprises:
determining a common signal configuration according to a first condition; and
detecting a common signal or transmitting a common signal based on the common signal configuration.

2. The method according to claim 1, wherein the common signal comprises at least one of: a synchronization signal/physical broadcast channel block (SSB), a system information block (SIB1), a physical random access channel (PRACH), a paging, a discovery reference signal (DRS), a primary synchronization signal (PSS), a secondary synchronization signal (SSS), a channel state information-reference signal (CSI-RS).

3. The method according to claim 1, wherein the common signal configuration comprises at least one of: a common signal transmission period, a common signal transmission period scaling factor, a common signal repetition period, a common signal modification period, a subcarrier spacing of a common signal, a common signal pattern, a common signal index indication, a common signal transmission power, a common signal power offset, a common signal time domain offset, or a common signal configuration timer.

4. The method according to claim 1, wherein the first condition comprises at least one of: a first signaling, a timer, a terminal type, or a terminal capability.

5. The method according to claim 4, wherein the first signaling comprises at least one of: a radio resource control (RRC) signaling, system information, an L1 signaling, or an L2 signaling.

6. The method according to claim 5, wherein the radio resource control (RRC) signaling is used to configure or update the common signal configuration; or the radio resource control (RRC) signaling is used to configure at least one set of common signal configurations, wherein the common signal configuration is a set of common signal configurations in the at least one set of common signal configurations.

7. The method according to claim 5, wherein the system information is used to configure or update the common signal configuration; or the system information is used to configure at least one set of common signal configurations, wherein the common signal configuration is a set of common signal configurations in the at least one set of common signal configurations.

8. The method according to claim 5, wherein the L1 signaling comprises at least one of: a first bit field, a second bit field, a third bit field, a fourth bit field, or a fifth bit field; and wherein the first bit field is used to indicate a current common signal configuration or an index of a common signal configuration associated with the current common signal configuration; the second bit field is used to indicate an updated common signal configuration or an index of a common signal configuration associated with the updated common signal configuration; the third bit field is used to indicate whether the common signal configuration is updated; the fourth bit field is used to indicate a PRACH configuration adaptive operation; and the fifth bit field is used to indicate a paging occasion adaptive operation.

9. The method according to claim 5, wherein the L1 signaling comprises group common downlink control information or cell specific downlink control information.

10. The method according to claim 5, wherein the L2 signaling comprises a first media access control control element (MAC CE), and the first MAC CE is an MAC CE used for activating or deactivating at least one secondary cell.

11. The method according to claim 10, wherein a reserved bit in the first MAC CE is used to indicate the common signal configuration.

12. The method according to claim 5, wherein the L2 signaling comprises a second MAC CE, and the second MAC CE comprises at least one of: a sixth bit field, a seventh bit field, an eighth bit field, a ninth bit field, or a reserved bit field; and wherein the sixth bit field is used to indicate activation or deactivation of at least one secondary cell; the seventh bit field is used to indicate activation or deactivation of a common signal configuration on the at least one secondary cell; the eighth bit field comprises an identifier of the secondary cell; and the ninth bit field comprises an index of a common signal configuration of the secondary cell.

13. The method according to claim 4, further comprising:
detecting the first signaling at least once within an application period associated with the common signal configuration.

14. The method according to claim 13, wherein the common signal configuration is adopted within the application period associated with the common signal configuration.

15. The method according to claim 13, wherein the application period is associated with at least one of: a system information modification period, a default paging cycle, a discontinuous reception (DRX) cycle, an extended discontinuous reception (e-DRX) cycle, a TRS validity duration, a common signal modification period, or a PRACH association period.

16. The method according to claim 4, further comprising:
detecting the first signaling within a detection time, wherein the detection time comprises at least one of: a first radio frame, or a first detection window.

17. The method according to claim 4, wherein the timer is associated with the common signal configuration.

18. The method according to claim 17, further comprising:
in response to expiration of the timer, updating the common signal configuration.

19. The method according to claim 1, wherein a validity duration of the common signal configuration is associated with at least one of: an application period associated with the common signal configuration, a timer associated with the common signal configuration, a common signal modification period, or a predefined time.

20. The method according to claim 1, wherein an effective time of the common signal configuration comprises any one of: a current moment, a start moment of a next application period of a current application period, a start moment of a next common signal modification period of a current common signal modification period, or a start moment of a second radio frame.

21. The method according to claim 20, wherein a system frame number *A* of the second radio frame satisfies: $\left(A+B\right) mod T = 0 ;$ wherein *B* is any one of: an effective time offset RF offset of the common signal configuration, a predefined parameter, or a high-layer configuration parameter; and *T* is any one of: a validity duration of the common signal configuration, an application period associated with the common signal configuration, a common signal modification period, or a predefined parameter.

22. A common signal processing method, applied to a second node, wherein the method comprises:
Configuring a common signal configuration; and
sending and/or configuring a first condition, wherein the first condition is used to trigger a first node to detect a common signal or transmit a common signal based on the common signal configuration.

23. The method according to claim 22, wherein the common signal comprises at least one of: a synchronization signal/physical broadcast channel block (SSB), a system information block (SIB1), a physical random access channel (PRACH), a paging, a discovery reference signal (DRS), a primary synchronization signal (PSS), a secondary synchronization signal (SSS), or a channel state information-reference signal (CSI-RS).

24. The method according to claim 22, wherein the common signal configuration comprises at least one of: a common signal transmission period, a common signal transmission period scaling factor, a common signal repetition period, a common signal modification period, a subcarrier spacing of a common signal, a common signal pattern, a common signal index indication, a common signal transmission power, a common signal power offset, a common signal time domain offset, or a common signal configuration timer.

25. The method according to claim 22, wherein the first condition comprises at least one of: a first signaling, a timer, a terminal type, or a terminal capability.

26. A communication apparatus, comprising a processor, wherein the processor, upon executing a computer program, implements the common signal processing method according to any one of claims 1 to 21, or implements the common signal processing method according to any one of claims 22 to 25.

27. A computer-readable storage medium, wherein the computer-readable storage medium comprises computer instructions; and wherein the computer instructions, upon being executed, implement the common signal processing method according to any one of claims 1 to 21, or implement the common signal processing method according to any one of claims 22 to 25.
